(19) Europäisches Patentamt
European Patent Office
Office européen des brevets

(11) **EP 1 057 240 B1**

(12) **FASCICULE DE BREVET EUROPEEN**

(45) Date de publication et mention de la délivrance du brevet:
**07.12.2005 Bulletin 2005/49**

(21) Numéro de dépôt: **98910815.4**

(22) Date de dépôt: **23.02.1998**

(51) Int Cl.$^7$: **H02K 9/26**

(86) Numéro de dépôt international:
**PCT/FR1998/000354**

(87) Numéro de publication internationale:
**WO 1999/043070 (26.08.1999 Gazette 1999/34)**

(54) **PROCEDE D'EPURATION DE CIRCUIT DE REFROIDISSEMENT DE STATOR D'ALTERNATEUR FONCTIONNANT EN CIRCUIT AERE, ET DISPOSITIF PERMETTANT SA MISE EN OEUVRE**

VERFAHREN ZUR REINIGUNG DES KÜHLFLÜSSIGKEITSKREISLAUF DES STATORS EINES MIT BELÜFTETEM KREISLAUF BETRIEBENEN DREHSTROMGENERATORS, SOWIE VORRICHTUNG ZUR DURCHFÜHRUNG EINES SOLCHEN VERFAHRENS

METHOD FOR PURIFYING THE COOLING CIRCUIT OF AN ALTERNATOR STATOR OPERATING IN VENTILATED CIRCUIT, AND IMPLEMENTING DEVICE

(84) Etats contractants désignés:
**BE CH DE ES FI FR GB IT LI**

(43) Date de publication de la demande:
**06.12.2000 Bulletin 2000/49**

(73) Titulaire: **Electricité de France**
**75008 Paris (FR)**

(72) Inventeur: **VERMEEREN, Didier**
**F-60150 Villers sur Coudun (FR)**

(74) Mandataire: **Boulinguiez, Didier et al**
**Cabinet Plasseraud**
**65/67 rue de la Victoire**
**75440 Paris Cedex 09 (FR)**

(56) Documents cités:
**EP-A- 0 073 494        US-A- 4 432 878**
**US-A- 4 434 058        US-A- 5 250 187**

**Description**

La présente invention concerne un procédé d'épuration de circuit de refroidissement de stator d'alternateur fonctionnant en mode aéré. Elle concerne également un dispositif permettant la mise en oeuvre de ce procédé.

Dans les centrales électriques, les alternateurs sont soumis au passage de fortes densités de courant qui provoquent un échauffement important. Pour lutter contre cet échauffement, les stators des alternateurs sont constitués par des réseaux de barres statoriques qui possèdent des conducteurs creux en cuivre dans lesquels circule de l'eau de refroidissement.

Afin d'avoir une conductivité la plus faible possible de l'eau de refroidissement, environ 1 à 7% du débit nominal de l'eau circulant dans le stator est dérivé vers une résine de déminéralisation à lit mélangé.

Un problème fréquemment rencontré avec ces systèmes de refroidissement est la formation de dépôts sur les parois internes des conducteurs creux, dépôts qui obstruent ces conducteurs. De telles obstructions conduisent à un échauffement et à terme à de nombreuses indisponibilités de l'alternateur ou à des baisses de charge.

Une tentative de solution a consisté à conditionner les circuits de refroidissement sous air. Cependant, ceci ne s'est pas avéré satisfaisant à long terme, le phénomène d'obstruction persistant.

Pour lutter contre ces obstructions, les alternateurs sont donc arrêtés périodiquement pour procéder à un nettoyage chimique des conducteurs creux en cuivre à l'aide de solutions acides et/ou complexantes. Cependant, ces opérations de nettoyage sont longues, conduisent à l'arrêt des machines et sont souvent corrosives pour les conducteurs creux. Le document EP-A-0073494 décrit un procédé d'épuration de circuit de refroidissement et le document US-A- 4, 434, 058 concerne un dispositif de refroidissement et un procédé pour lutter contre la corrosion des conducteurs creux.

Ainsi, il existe un réel besoin en un procédé permettant de lutter contre la formation et/ou permettant d'éliminer les dépôts responsables de l'obstruction des conducteurs creux en cuivre de stator d'alternateurs dans un circuit de refroidissement fonctionnant en mode aéré. Un tel procédé ne doit pas provoquer l'arrêt de l'alternateur, ne doit pas générer des conductivités élevées au niveau de l'eau de refroidissement et ne doit pas provoquer de corrosion importante des conducteurs creux en cuivre.

Les inventeurs, après de longs travaux de recherche, ont eu le mérite de mettre au point un tel procédé.

Ce procédé permet à la fois de lutter contre la formation de ces dépôts et de détruire les éventuelles formations de dépôts à l'intérieur des conducteurs creux en cuivre, sans arrêt de l'alternateur, sans générer de conductivités élevées et en induisant une corrosion infime.

Ainsi, l'invention porte sur un procédé d'épuration de l'eau circulant dans les conducteurs creux en cuivre de stator d'alternateur dont le circuit de refroidissement est conditionné en mode aéré, procédé suivant lequel l'eau du circuit fermé de refroidissement du stator de l'alternateur est entraînée à partir du réservoir d'expansion par une pompe, refroidie et éventuellement filtrée afin d'alimenter les conducteurs creux en cuivre du stator d'alternateur, ledit procédé étant caractérisé par le fait qu'une partie de l'eau est dérivée en amont de l'alternateur vers un circuit de désionisation alimentant le réservoir d'expansion, ledit circuit de désionisation comprenant un circuit de déminéralisation constitué d'une résine à lit mélange et un circuit de traitement placé en parallèle du circuit de déminéralisation et caractérisé par le fait que, sans arrêt de l'alternateur:

- lorsque le débit d'entrée dans le circuit de désionisation est à une valeur inférieure à 20 du débit nominal tranversant le stator, le circuit de traitement consiste en une résine échangeuse de cations,
- lorsque le débit d'entrée dans le circuit de désionisation est à une valeur supérieure à 20% du débit nominal traversant le stator, soit le circuit de traitement est interrompu, soit le circuit de traitement consiste en une résine échangeuse de cations soit le circuit de traitement consiste en une résine à lit mélangé.

Un tel procédé peut être utilisé pour tous les types d'alternateurs refroidis par une circulation d'eau aérée dans des conducteurs creux en cuivre des barres statoriques formant le stator. A titre d'exemples de tels alternateurs, on peut citer tous les alternateurs de centrales thermiques à flammes ou de centrales nucléaires ayant une puissance d'au moins 250MW.

Dans le procédé selon l'invention, l'eau dérivée dans le circuit de déminéralisation traverse une colonne à lit mélangé apte à retenir d'une part les ions $HCO_3^-$ et d'autre part les ions $Cu^{2+}$. Avec une telle colonne, les ions $Cu^{2+}$ provenant de la dégradation normale de la paroi interne des conducteurs en cuivre, qui ont un léger caractère basique sont retenus, tout comme les ions $HCO_3^-$ provenant de la dissolution du gaz carbonique de l'air dans l'eau et qui présentent un léger caractère acide. Ainsi, le pH de l'eau de refroidissement est maintenu à un pH neutre. Des exemples de colonnes à lit mélangé sont notamment ARM 9882 de la société ROHM & HAAS, NRW 354 de la Société PUROLITE.

Lorsqu'une résine cationique est mise en oeuvre, on utilise une résine cationique permettant de retenir les ions $Cu^{2+}$. Cette résine est choisie notamment parmi les résines de type NRW 160 de la Société PUROLITE, ARC 9652 de la Société ROHM & HAAS.

Selon l'invention, lorsque l'eau du circuit de traitement traverse une résine échangeuse de cations, le procédé comprend un cycle d'étapes consistant à :

a)interrompre le circuit de déminéralisation tout en maintenant la circulation dans le circuit de traitement ;
b)remettre en fonctionnement le circuit de déminéralisation tout en maintenant la circulation dans le circuit de traitement.

Ainsi, au cours de l'étape a), les ions $Cu^{2+}$ sont piégés. Le milieu s'acidifie donc en raison de l'augmentation relative de la concentration en $HCO_3^-$. Or, la Demanderesse a mis en évidence que les dépôts responsables de l'obturation sont des dépôts de CuO qui se forment par précipitation des ions cuivriques et qui se dissolvent plus aisément en milieu acide. Au cours de l'étape a) la dissolution des dépôts de CuO est donc favorisée.

Cependant, si la concentration en $Cu^{2+}$ est trop élevée, CuO risque de précipiter à nouveau et si le pH est trop faible, il existe un risque de dépassiver le cuivre et d'avoir des vitesses de corrosion du cuivre élevées C'est pourquoi, il est nécessaire de remettre en fonctionnement le circuit de déminéralisation. Au cours de l'étape b), les ions $HCO_3^-$ sont piégés, le pH de l'eau va donc augmenter et la concentration en cuivre dissous étant élevée, une grande partie du cuivre va précipiter. Le pH va instantanément redevenir neutre et la concentration en cuivre dissous va diminuer. Lorsque les conditions de fonctionnement normal sont retrouvées, on recommence à nouveau l'étape a). Globalement, on redissout davantage du CuO qu'il en reprécipite : ce traitement permet donc l'élimination des dépôts responsable du phénomène d'obstruction des conducteurs creux.

Le passage de l'étape a) à l'étape b) est donc déterminé par la concentration en cuivre dissous dans l'eau en amont du circuit de traitement constitué par la résine échangeuse de cations et par le pH de l'eau.

En cours d'épuration cationique, c'est-à-dire lorsque le circuit de traitement consistant en une résine cationique est en fonctionnement, la concentration en cuivre dissous maximale autorisée en amont du circuit de traitement est telle qu'elle ne permette pas une précipitation de CuO, et le pH minimum autorisé est tel qu'il permette d'éviter une corrosion trop importante des conducteurs creux en cuivre.

Ainsi, la concentration maximale autorisée en cuivre dissous est inférieure à 200ppb, de préférence inférieure à 180ppb, et plus préférentiellement encore inférieure à environ 160ppb.

Le pH est contrôlé de façon à ne pas être inférieur à 6.

Le cycle d'étapes a) et b) est arrêté lorsque les dépôts responsables de l'obstruction ont tous été dissous, et alors la résine échangeuse de cations du circuit de traitement est remplacée par une résine à lit mélangé choisie de façon à ce que les deux résines à lit mélangé disposées en parallèle soient aptes à traiter un débit supérieur à 20% du débit nominal d'eau traversant le stator. Avec un tel débit traité sur lit mélangé, on limite substantiellement les risques de formation de dépôts responsables de l'obstruction.

De préférence, la résine à lit mélangé introduite dans le circuit de traitement est capable de traiter un débit supérieur à 20% du débit nominal traversant le stator, de telle sorte que l'on puisse interrompre le circuit de déminéralisation pour changer éventuellement le lit mélangé défaillant. Ce circuit est alors ouvert et le circuit de déminéralisation fermé. Le lit mélangé défectueux est remplacé par un lit mélangé neuf.

Au cours d'un traitement selon l'invention sur site industriel, on considère que les dépôts responsables des obstructions sont dissous environ 4 mois après que le stator a retrouvé ses caractéristiques techniques d'origine. On considère que le stator a retrouvé ses caractéristiques techniques lorsque le coefficient d'encrassement Ke défini ci-dessous atteint sa valeur limite, valeur limite qui correspond à celle calculée lorsque le dispositif est neuf.

$$Ke = \frac{\text{température de l'eau dans la barre - température d'entrée dans le stator}}{(\text{puissance active})^2 + (\text{puissance réactive})^2}$$

Dans le procédé selon l'invention, lorsque le circuit de traitement consiste en une résine à lit mélangé,

- ou bien on fixe le débit d'entrée dans le circuit de déminéralisation à une valeur supérieure à 20% du débit nominal traversant le stator et on interrompt le circuit de traitement, ou inversement ;
- ou bien on ouvre les deux circuits de façon à ce que l'eau traverse les deux circuits.

Dans ce dernier cas, le débit à l'entrée du circuit de désionisation est supérieur à 20% du débit nominal d'eau traversant le stator.

Ainsi, lorsque le circuit de traitement consiste en une résine à lit mélangé, il peut être utilisé pour la déminéralisation conjointement avec le circuit de déminéralisation, ou bien il peut assurer le remplacement de la résine à lit mélangé du circuit de déminéralisation qui serait défectueuse. Dans le premier cas, l'eau traverse donc les deux circuits, alors que dans le second cas, on interrompt l'un des circuits afin de procéder au remplacement de la résine défectueuse.

Bien entendu, la concentration en cuivre dissous en amont du circuit de désionisation est très inférieure au seuil limite déterminé ci-dessus de 160ppb. De même, le pH est toujours supérieur à 6.

La présente invention porte également sur un dispositif permettant la mise en oeuvre du procédé décrit ci-dessus.

Ce dispositif consiste en un circuit fermé de circulation d'eau de refroidissement dans des conducteurs creux en cuivre du stator de l'alternateur comprenant une pompe, un dispositif de refroidissement, éventuellement un filtre, l'alternateur, un réservoir d'expansion et un circuit de désionisation placé en amont de l'alternateur et débouchant sur le réservoir d'expansion, ledit circuit de désionisation comprenant un circuit de déminéralisation à lit mélangé et un circuit de traitement en parallèle du circuit de déminéralisation, caractérisé par le fait que sans arrêt de l'alternateur:

- lorsque la débit d'entrée dans le circuit de désionisation est inférieur à 20% du débit nominal d'eau traversant la stator, le circuit de traitement consiste en une résine échangeuse de cations,
- lorsque le débit d'entrée dans le circuit de désionisation est supérieur à 20% du débit nominal d'eau traversant le stator, le circuit de traitement consiste en une résine à lit mélangé ou une résine échangeuse de cations.

Etant donné que le circuit de refroidissement fonctionne en mode aéré, le dispositif est tel qu'au niveau du réservoir d'expansion, il y a un mélange entre l' air et l'eau, notamment si l'eau est bien aérée on a une teneur en oxygène comprise entre 4 et 8ppm et alors on a une pression partielle en air nettement supérieure à $2,0265 \times 10^4$Pa (0,2 atm.) En dessous de cette pression, des bouchages peuvent à nouveau apparaître.

Ce dispositif comporte un moyen permettant au circuit de déminéralisation d'être fermé ou ouvert tout en maintenant ouvert la circuit parallèle de traitement, et inversement.

Avantageusement, ce dispositif comporte également un moyen de contrôle de la concentration en cuivre. dissous en amont et en aval du circuit de déminéralisation et des moyens de contrôle du pH de l'eau de refroidissement. De façon pratique, ces moyens de contrôle consistent en une vanne de prélèvement de l'eau de circuit de refroidissement, les mesures de concentration et de pH étant réalisées de façon classique sur l'eau ainsi prélevée.

Dans le dispositif selon l'invention, la colonne à lit mélangé est capable de retenir d'une part les ions $HCO_3^-$ et d'autre part les ions $Cu^{2+}$, et la résine cationique est capable de retenir notamment les ions $Cu^{2+}$.

La colonne à lit mélangé peut être une colonne de type ARM 9882 de la Société ROHM & HAAS, NRW 354 de la Société PUROLITE.

La résine cationique peut être du type NRW 160 de la Société PUROLITE, ARC 9652 de la Société ROHM & HAAS.

La présente invention va maintenant être décrite de façon plus détaillée à l'aide des dessins et de l'exemple donné à titre purement illustratif.

Sur les dessins :

- la Figure 1 représente de façon schématique un circuit de refroidissement de stator d'alternateur fonctionnant en mode aéré selon l'art antérieur,
- la Figure 2 représente de façon schématique un circuit d'épuration de circuit de refroidissement de stator d'alternateur fonctionnant en mode aéré selon l'invention,
- la Figure 3 représente un graphique illustrant le suivi au cours du temps du pH et de la concentration en cuivre dissous lors de la mise en oeuvre du procédé selon l'invention,
- la Figure 4 représente un graphique illustrant l'évolution du coefficient d'encrassement d'un stator traité par le procédé selon l'invention.

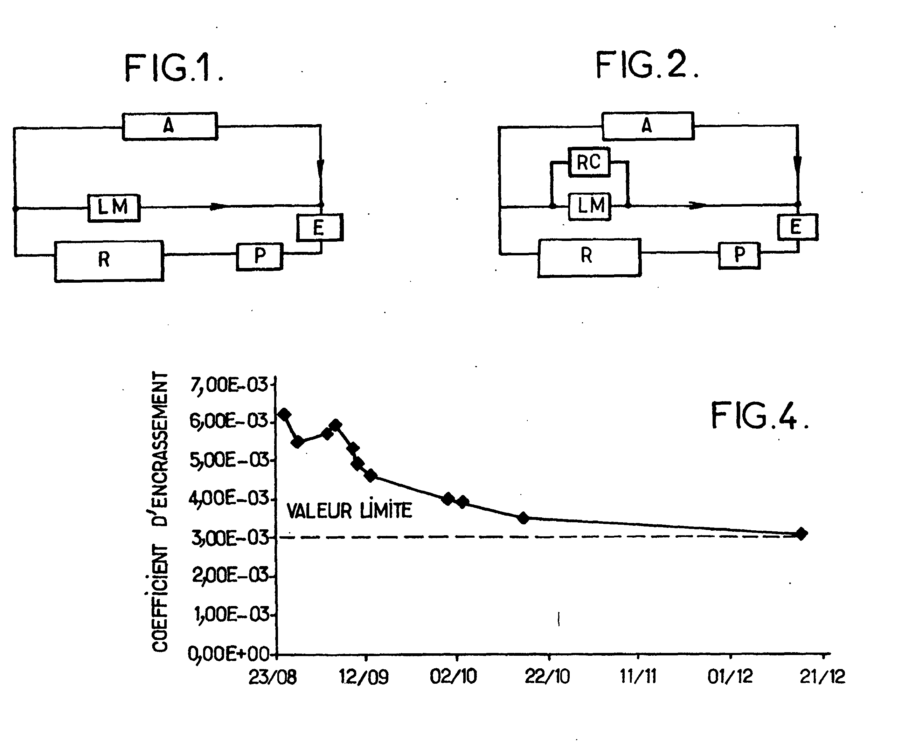

Sur la Figure 1, on a représenté un dispositif de refroidissement du stator d'alternateur fonctionnant en mode aéré.

L'eau est entraînée par la pompe P et refroidie par le réfrigérant R avant de traverser les conducteurs creux en cuivre du stator de l'alternateur A. Puis après passage par le réservoir d'expansion E, pénètre à nouveau dans la pompe. En amont de l'alternateur A, une partie de l'eau en circulation est dérivée vers le circuit de déminéralisation où elle traverse une colonne à lit mélangé LM avant de rejoindre le réservoir d'expansion.

Sur la Figure 2 est représenté un dispositif d'épuration selon l'invention. Ce dispositif diffère de celui décrit sur la Figure 1 par le fait qu'au circuit de déminéralisation est superposé, en parallèle, un circuit de traitement. Ici, le circuit de traitement est une résine échangeuse de cations RC et le circuit de déminéralisation un lit mélangé.

**Exemple :**

Le dispositif selon l'invention a été utilisé sur un stator d'alternateur de centrale nucléaire de puissance 900 MW refroidi en mode aéré, en utilisant une circulation d'eau à un débit nominal traversant le stator de 140 m$^3$/h, un

débit à l'entrée du circuit de déminéralisation de 6 m³/h et un débit à l'entrée du circuit de traitement de 20 m³/h.

La valeur maximale autorisée pour la concentration en cuivre est fixée à 160ppb et la valeur minimale du pH est fixée à 6.

Ainsi, dans un premier temps la résine cationique RC fonctionne seule puisque lorsque le pH atteint 6 ou que la concentration en cuivre dissous atteint 160ppb, le circuit de déminéralisation est ouvert, puis quand on retrouve les conditions normales, le circuit de déminéralisation est fermé.

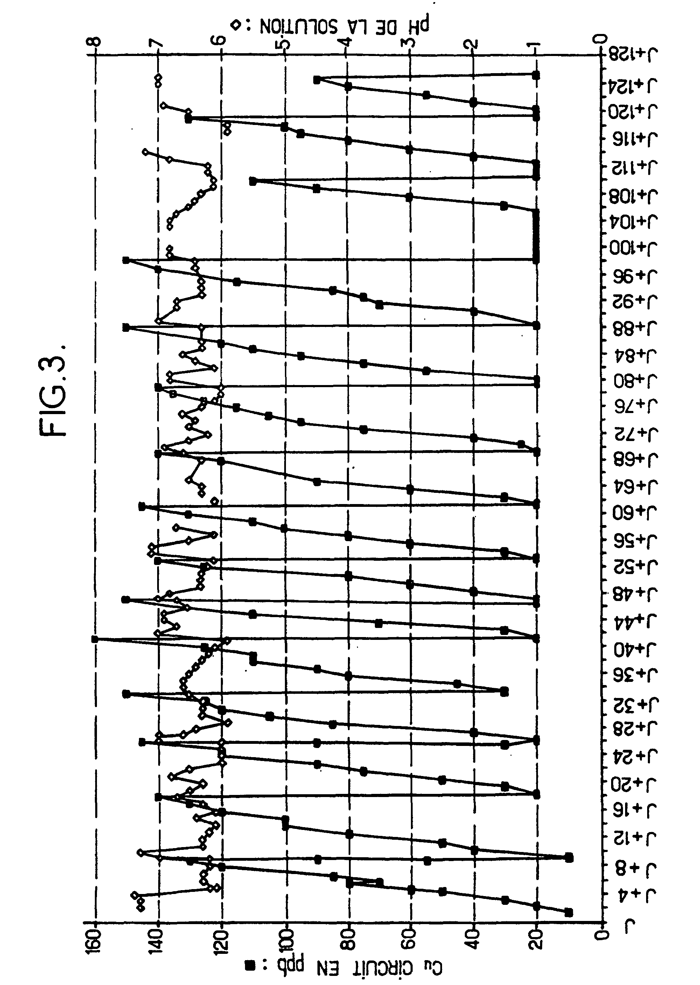

Les valeurs de pH et de concentration en Cu ont été suivies pendant quatre mois. Les résultats sont rassemblés sur le graphique de la Figure 3.

La vitesse de corrosion observée pendant cette opération est très faible de l'ordre de 5 μm/an au maximum alors qu'en procédant à des nettoyages chimiques, elle est de l'ordre de 25 à 150 μm/opération de nettoyage.

Par ailleurs, le coefficient d'encrassement du stator traité par épuration cationique a été suivi. Les résultats sont repris sur la Figure 4.

Lorsque le coefficient d'encrassement a atteint sa valeur limite (3.10⁻³), le traitement a été poursuivi pendant encore 4 mois. Puis, la résine échangeuse de cations a été remplacée par une résine à lit mélangé apte à traiter au moins 15% du débit nominal. Le circuit de déminéralisation est alors resté ouvert (5% du débit nominal) de façon à traiter globalement au moins 20% du débit nominal d'eau traversant le stator.

**Revendications**

1. Procédé d'épuration de circuit de refroidissement de stator d'alternateur (A) fonctionnant en mode aéré suivant lequel l'eau du circuit fermé de refroidissement du stator de l'alternateur est entraînée par une pompe (P) à partir d'un réservoir d'expansion (E), refroidie et éventuellement filtrée afin d'alimenter les conducteurs creux en cuivre du stator d'alternateur, ledit procédé étant **caractérisé par le fait qu'**une partie de l'eau est dérivée en amont de l'alternateur vers un circuit de désionisation alimentant le réservoir d'expansion, ledit circuit de désionisation comprenant un circuit de déminéralisation à lit mélangé (LM) et un circuit de traitement placé en parallèle du circuit de déminéralisation, et **par le fait que**, sans arrêt de l'alternateur:

   - lorsque le débit d'entrée dans le circuit de désionisation est fixé à une valeur inférieure à 20% du débit nominal traversant le stator, le circuit de traitement consiste en une résine échangeuse de cations,
   - lorsque le débit d'entrée dans le circuit de désionisation est fixé à une valeur supérieure à 20% du débit nominal traversant le stator, soit le circuit de traitement est interrompu, soit le circuit de traitement consiste en une résine échangeuse de cations ou en une résine à lit mélangé.

2. Procédé selon la revendication1, **caractérisé par le fait que** l'on utilise une colonne à lit mélangé apte à retenir notamment les ions $HCO_3^-$ et les ions $Cu^{2+}$.

3. Procédé selon la revendication 1 ou 2, **caractérisé par le fait que** l'on utilise une résine échangeuse de cations apte à retenir notamment les ions $Cu^{2+}$.

4. Procédé selon l'une quelconque des revendications 1 à 3, **caractérisé par le fait que** lorsque l'eau du circuit de traitement traverse une résine échangeuse de cations, on réalise le cycle d'étapes consistant à :

   a) interrompre le circuit de déminéralisation tout en maintenant la circulation dans le circuit de traitement ;
   b) remettre en fonctionnement le circuit de déminéralisation tout en maintenant la circulation dans le circuit de traitement.

5. Procédé selon la revendication 4, **caractérisé par le fait que** l'on arrête le cycle d'étapes a) et b) et que l'on remplace dans le circuit de traitement la résine échangeuse de cations par une résine à lit mélangé choisie de façon à ce que les deux résines à lit mélangé des circuits en parallèle soient aptes à traiter un débit supérieur à 20% du débit nominal d'eau traversant le stator.

6. Procédé selon l'une quelconque des revendications 1 à 5, **caractérisé par le fait que** lorsque le circuit de traitement consiste en une résine à lit mélangé :

   - soit le débit d'entrée dans le circuit de déminéralisation est à une valeur supérieure à 20% du débit nominal traversant le stator et on interrompt le circuit de traitement, ou inversement ;
   - soit on ouvre les deux circuits de façon à ce que l'eau traverse les deux circuits.

7. Procédé selon l'une quelconque des revendications 1 à 6, **caractérisé par le fait que** la concentration maximale autorisée en cuivre dissous en amont du circuit de désionisation est telle qu'elle ne permette pas une précipitation de CuO.

8. Procédé selon la revendication 7, **caractérisée par le fait que** ladite concentration est inférieure à 200ppb, de préférence inférieure à 180ppb, et plus préférentiellement encore inférieure à environ 160ppb.

9. Procédé selon l'une quelconque des revendications 1 à 8, **caractérisé par le fait que** le pH minimal autorisé est 6, de façon à éviter une corrosion trop importante des conducteurs creux en cuivre.

10. Dispositif d'épuration de circuit de refroidissement de stator d'alternateur fonctionnant en mode aéré, ledit dispositif consistant en un circuit fermé de circulation d'eau de refroidissement dans des conducteurs en cuivre creux du stator de l'alternateur comprenant une pompe, un dispositif de refroidissement, éventuellement un filtre, l'alternateur, un réservoir d'expansion et un circuit de désionisation placé en amont de l'alternateur et débouchant sur le réservoir d'expansion, ledit circuit de désionisation comprenant un circuit de déminéralisation et un circuit de traitement en parallèle du circuit de déminéralisation, ledit dispositif étant **caractérisé par le fait que**, sans arrêt de l'alternateur:

   - lorsque le débit d'entrée dans le circuit de désionisation est inférieur à 20% du débit nominal d'eau traversant le stator, le circuit de traitement consiste en une résine échangeuse de cations,
   - lorsque le débit d'entrée dans le circuit de désionisation est supérieur 20% du débit nominal d'eau traversant le stator, le circuit de traitement consiste en une résine à lit mélangé ou en une résine échangeuse de cations.

11. Dispositif selon la revendication 10, **caractérisé par le fait qu'**il comporte un moyen permettant d'ouvrir ou de fermer le circuit de déminéralisation tout en maintenant ouvert le circuit de traitement et inversement.

12. Dispositif selon la revendication 10 ou 11, **caractérisé par le fait que** lorsque le débit d'entrée dans le circuit de désionisation est supérieur à 20% du débit nominal d'eau traversant le stator, le circuit de déminéralisation et le circuit de traitement consistent en des résines à lit mélangé aptes à traiter chacune au moins 10%, de préférence au moins 20% du débit nominal d'eau traversant le stator.

13. Dispositif selon l'une quelconque des revendications 10 à 12, **caractérisé par le fait qu'**il comporte des moyens de contrôle de la concentration en cuivre dissous en amont du circuit d'épuration et des moyens de contrôle du pH de l'eau de refroidissement.

14. Dispositif selon l'une quelconque des revendications 10 à 13, **caractérisé par le fait que** la colonne à lit mélangé est capable de retenir notamment les ions $HCO_3^-$ et les ions $Cu^{2+}$.

15. Dispositif selon l'une quelconque des revendications 10 à 14, **caractérisé par le fait que** la résine cationique est capable de retenir notamment les ions $Cu^{2+}$.

**Patentansprüche**

1. Verfahren zur Reinigung eines Kühlkreislaufs eines Stators eines im belüftetem Modus betriebenen Wechselstromgenerators (A), demgemäß das Wasser des geschlossenen Kühlkreislaufs des Stators des Wechselstromgenerators durch eine Pumpe (P) aus einem Expansionsbehälter (E) weggeführt, gekühlt und gegebenenfalls filtriert wird, um die hohlen Kupferleiter des Stators des Wechselstromgenerators zu speisen, wobei das Verfahren **dadurch gekennzeichnet ist, dass** ein Teil des Wassers von stromaufwärts des Wechselstromgenerators zu einem Entionisierungskreislauf, der den Expansionsbehälter speist, abgeleitet wird, wobei der Entionisierungskreislauf einen Entmineralisierungskreislauf mit Mischbett (LM) und einen parallel zum Entmineralisierungskreislauf angeordneten Behandlungskreislauf umfasst, und **dadurch**, dass ohne Anhalten des Wechselstromgenerators,

   - wenn der Eingangsdurchfluss im Entionisierungskreislauf einen Wert unterhalb von 20 % des nominalen den Stator durchlaufenden Durchflusses aufweist, der Behandlungskreislauf aus einem Kationenaustauschharz besteht,
   - wenn der Eingangsdurchfluss im Entionisierungskreislauf einen Wert oberhalb von 20 % des nominalen des den Stator durchlaufenden Durchflusses aufweist, entweder der Behandlungskreislauf unterbrochen wird oder der Behandlungskreislauf aus einem Kationenaustauschharz oder aus einem Mischbettharz besteht.

2. Verfahren gemäß Anspruch 1, **dadurch gekennzeichnet, dass** eine Mischbettsäule verwendet wird, die besonders zum Zurückhalten der $HCO_3^-$-Ionen und der $Cu^{2+}$-Ionen geeignet ist.

3. Verfahren gemäß Anspruch 1 oder 2, **dadurch gekennzeichnet, dass** ein Kationenaustauschharz verwendet wird, das besonders zum Zurückhalten der $Cu^{2+}$-Ionen geeignet ist.

4. Verfahren gemäß einem der Ansprüche 1 bis 3, **dadurch gekennzeichnet, dass**, wenn das Wasser des Behandlungskreislaufs ein Kationenaustauschharz durchläuft, der Zyklus der Schritte ausgeführt wird bestehend aus:

a) Unterbrechen des Entmineralisierungskreislaufs, obwohl die Zirkulation im Behandlungskreislauf aufrechterhalten wird;
b) Wederinbetriebnehmen des Entmineralisierungskreislaufs, obwohl die Zirkulation im Behandlungskreislauf aufrechterhalten wird.

5. Verfahren gemäß Anspruch 4, **dadurch gekennzeichnet, dass** der Zyklus der Schritte a) und b) angehalten wird und dass im Behandlungskreislauf das Kationenaustauschharz durch ein Mischbettharz auf die Weise ersetzt wird, dass die beiden Mischbettharze der parallelen Kreisläufe geeignet sind, einen Durchfluss von mehr als 20 % des nominalen Durchflusses des den Stator durchlaufenden Wassers zu behandeln.

6. Verfahren gemäß einem der Ansprüche 1 bis 5, **dadurch gekennzeichnet, dass**, wenn der Behandlungskreislauf aus einem Mischbettharz besteht:

- entweder der Eingangsdurchfluss im Entmineralisierungskreislauf einen Wert oberhalb von 20 % des nominalen den Stator durchlaufenden Durchflusses aufweist und der Behandlungskreislauf unterbrochen wird oder umgekehrt;
- oder die beiden Kreisläufe auf die Weise geöffnet werden, dass das Wasser die beiden Kreisläufe durchläuft.

7. Verfahren gemäß einem der Ansprüche 1 bis 6, **dadurch gekennzeichnet, dass** die maximale zulässige Konzentration von gelöstem Kupfer stromaufwärts des Entionisierungskreislaufs derartig ist, dass sie keine Ausfällung von CuO erlaubt.

8. Verfahren gemäß Anspruch 7, **dadurch gekennzeichnet, dass** die Konzentration unterhalb von 200 ppb, vorzugsweise unterhalb von 180 ppb und stärker bevorzugt noch unterhalb von etwa 160 ppb liegt.

9. Verfahren gemäß einem der Ansprüche 1 bis 8, **dadurch gekennzeichnet, dass** der minimale zulässige pH 6 ist, so dass eine zu umfangreiche Korrosion der hohlen Kupferleiter verhindert wird.

10. Vorrichtung zur Reinigung eines Kühlkreislaufs eines Stators eines im belüftetem Modus betriebenen Wechselstromgenerators, wobei die Vorrichtung aus einem geschlossenen Kreislauf zur Kühlwasserzirkulation in hohlen Kupferleitern des Stators des Wechselstromgenerators besteht, umfassend eine Pumpe, eine Kühlvorrichtung, gegebenenfalls ein Filter, den Wechselstromgenerator, einen Expansionsbehälter und einen stromaufwärts des Wechselstromgenerators angeordneten und zu dem Expansionsbehälter führenden Entionisierungskreislauf, wobei der Entionisierungskreislauf einen Entmineralisierungskreislauf und einen parallel zum Entmineralisierungskreislauf angeordneten Behandlungskreislauf umfasst, wobei die Vorrichtung **dadurch gekennzeichnet ist, dass** ohne Anhalten des Wechselstromgenerators,

- wenn der Eingangsdurchfluss im Entionisierungskreislauf weniger als 20 % des nominalen Durchflusses des den Stator durchlaufenden Wassers aufweist, der Behandlungskreislauf aus einem Kationenaustauschharz besteht,
- wenn der Eingangsdurchfluss im Entionisierungskreislauf mehr als 20 % des nominalen Durchflusses des den Stator durchlaufenden Wassers aufweist, der Behandlungskreislauf aus einem Mischbettharz oder aus einem Kationenaustauschharz besteht.

11. Vorrichtung gemäß Anspruch 10, **dadurch gekennzeichnet, dass** sie ein Mittel umfasst, welches Öffnen oder Schließen des Entmineralisierungskreislaufs erlaubt, obwohl der Behandlungskreislauf offengehalten wird und umgekehrt.

**12.** Vorrichtung gemäß Anspruch 10 oder 11, **dadurch gekennzeichnet, dass**, wenn der Eingangsdurchfluss im Entionisierungskreislauf mehr als 20 % des nominalen Durchflusses des den Stator durchlaufenden Wassers aufweist, der Entmineralisierungskreislauf und der Behandlungskreislauf aus Mischbettharzen bestehen, die jeweils geeignet sind, wenigstens 10 %, vorzugsweise wenigstens 20 %, des nominalen Durchflusses des den Stator durchlaufenden Wassers zu behandeln.

**13.** Vorrichtung gemäß einem der Ansprüche 10 bis 12, **dadurch gekennzeichnet, dass** sie Mittel zur Kontrolle der Konzentration von gelöstem Kupfer stromaufwärts des Reinigungskreislaufs und Mittel zur pH-Kontrolle des Kühlwassers umfasst.

**14.** Verfahren gemäß einem der Ansprüche 10 bis 13, **dadurch gekennzeichnet, dass** die Mischbettsäule besonders zum Zurückhalten der $HCO_3^-$-Ionen und der $Cu^{2+}$-Ionen fähig ist.

**15.** Verfahren gemäß einem der Ansprüche 10 bis 14, **dadurch gekennzeichnet, dass** das Kationenharz besonders zum Zurückhalten der $Cu^{2+}$-Ionen fähig ist.

**Claims**

**1.** A method for purifying the cooling circuit of an alternator stator (A) operating in ventilated mode according to which the water of the closed cooling circuit of the alternator stator is drawn by a pump (P) from an expansion tank (E), cooled and, if necessary, filtered in order to supply hollow copper conductors of the alternator stator, said method being **characterized in that** part of the water is diverted upstream of the alternator towards a deionization circuit feeding into an expansion reservoir, said deionization circuit comprising a mixed-bed demineralization circuit (MB) and a treatment circuit placed parallel to the demineralization circuit, and **in that**
when the inflow rate into the deionization circuit is at a value less than 20% of the nominal flow passing through the stator, the treatment circuit consists of a cation-exchanging resin,
when the inflow rate into the deionization circuit is at a value greater than 20% of the nominal flow passing through the stator, the treatment circuit is interrupted or the treatment circuit consists of a cation-exchanging resin or consists of a mixed-bed resin.

**2.** Method according to claim 1, **characterized in that** a mixed-bed column able to retain in particular $HCO_3^-$ ions and $Cu^{2+}$ ions is used.

**3.** Method according to claim 1 or 2, **characterized in that** a cation-exchanging resin able to retain $Cu^{2+}$ ions is used.

**4.** Method according to any one of claims 1 to 3,
**characterized in that**, when the water of the treatment circuit passes through a cation-exchanging resin, a cycle consisting of the following stages is implemented:

a) interrupt the demineralization circuit while maintaining circulation in the treatment circuit;
b) restore operation of the demineralization circuit while maintaining circulation in the treatment circuit.

**5.** Method according to claim 4, **characterized in that** the cycle of stages a) and b) is stopped and the cation-exchanging resin in the treatment circuit is replaced by a mixed-bed resin so chosen that the two mixed-bed resins in the parallel circuits are able to treat a flow greater than 20% of the nominal flow of water passing through the stator.

**6.** Method according to any of claims 1 to 5, **characterized in that** when the treatment circuit consists of a mixed-bed resin:

either the inflow rate into the demineralization circuit has a value greater than 20% of the nominal flow passing through the stator and the treatment circuit is interrupted, or inversely,
both circuits are opened so that the water passes through both circuits.

**7.** Method according to any one of claims 1 to 6, **characterized in that** the maximum authorized concentration of dissolved copper upstream of the deionization circuit is such that it does not allow precipitation of CuO.

8. Method according to claim 7, **characterized in that** said concentration is less than 200 ppb, preferably less than 180 ppb and more preferably less than 160 ppb.

9. Method according to any of claims 1 to 8, **characterized in that** the minimum authorized pH is 6, so as to avoid excessive corrosion of the hollow copper conductors.

10. A device for purifying the cooling circuit of an alternator stator operating in ventilated mode, said device consisting of a closed circuit for the circulation of cooling water in hollow copper conductors of the alternator stator, comprising a pump, a cooling device, if necessary a filter, the alternator, an expansion tank and a deionization circuit placed upstream of the alternator and feeding into the expansion tank, said deionization circuit comprising a demineralization circuit and a treatment circuit parallel to the demineralization circuit, said device being **characterized in that**, without stopping the alternator,
when the inflow rate into the deionization circuit is less than 20% of the nominal flow of water passing through the stator, the treatment circuit consists of a cation-exchanging resin,
when the inflow rate into the deionization circuit is greater than 20% of the nominal flow of water passing through the stator, the treatment circuit consists either of a mixed-bed resin or of a cation-exchanging resin.

11. Device according to claim 10, **characterized in that** it comprises means allowing the demineralization circuit to be opened or closed while keeping the treatment circuit open, and inversely.

12. Device according to claims 10 or 11, **characterized in that** when the inflow rate into the deionization circuit is greater than 20% of the nominal flow of water passing through the stator, the demineralization circuit and the treatment circuit consist of mixed-bed resins each able to treat at least 10%, preferably at least 20% of the nominal flow of water passing through the stator.

13. Device according to any of claims 10 to 12, **characterized in that** it comprises means for monitoring the concentration of dissolved copper upstream of the purification circuit and means for monitoring the pH of the cooling water.

14. Device according to any of claims 10 to 13, **characterized in that** the mixed-bed column is able to retain in particular $HCO_3^-$ ions and $Cu^{2+}$ ions.

15. Device according to any of claims 10 to 14, **characterized in that** the cationic resin is able to retain $Cu^{2+}$ ions.

EP 1 057 240 B1

# FIG.1.

# FIG.2.

# FIG.4.

FIG.3.